# EUROPEAN PATENT SPECIFICATION

(11) **EP 2 964 014 B1**
(45) Date of publication and mention of the grant of the patent: **28.02.2018**
(21) Application number: 14709440.3
(22) Date of filing: 06.03.2014
(51) Int. Cl.: A01G 9/24

(54) **A SYSTEM FOR DEHUMIDIFYING AIR, A GREENHOUSE PROVIDED WITH SUCH A SYSTEM AND A METHOD FOR DEHUMIDIFYING AIR IN SUCH A GREENHOUSE**
LUFTENTFEUCHTUNGSSYSTEM, TREIBHAUS MIT EINEM SOLCHEN SYSTEM UND VERFAHREN ZUR LUFTENTFEUCHTUNG IN EINEM SOLCHEN TREIBHAUS
SYSTÈME DE DÉSHUMIDIFICATION DE L'AIR, SERRE MUNIE D'UN TEL SYSTÈME ET PROCÉDÉ POUR DÉSHUMIDIFIER L'AIR DANS UNE TELLE SERRE

(30) Priority: 07.03.2013 EP 13158235
(43) Date of publication of application: 13.01.2016
(73) Proprietor: Nederlandse Organisatie voor toegepast- natuurwetenschappelijk onderzoek TNO, 2595 DA 's-Gravenhage (NL)
(72) Inventor: VAN WOLFEREN, Johannes, 2595 DA Den Haag (NL); TER STEEG, Robertus Theodorus Martinus, 2595 DA Den Haag (NL); HAMMINK, Hendrik Arie Johan, 2595 DA Den Haag (NL); WISSINK, Edo B., 2595 DA Den Haag (NL)
(74) Representative: V.O.
(86) International application number: PCT/NL2014/050134
(87) International publication number: WO 2014/137213

(56) References cited:
- WO-A1-2007/101914
- DE-A1- 19 754 405
- GB-A- 2 470 910
- JP-A- S63 223 332
- US-A- 4 707 995

## Description

### Field of the invention

The present invention relates to a system for dehumidifying air, to a greenhouse provided with a such a system and to a method for dehumidifying air in such a greenhouse.

### Background

To achieve optimal plant growth in a greenhouse, it is necessary to maintain an indoor climate that reflects the optimal conditions for plant growth as closely as possible. These conditions relate in particular to air humidity, temperature, carbon dioxide level. In recent years, the development of greenhouse climate control systems has focussed on closed systems. Such systems allow for the dehumidification of air, necessary to prevent plant diseases, without exchanging air with the typically cold outside environment of the greenhouse. Keeping greenhouse air within the greenhouse makes it more economical to maintain an optimal temperature and carbon dioxide level inside.

WO 2007/101,914-A1 (Haukioja et al.) discloses such a closed system and method for dehumidifying greenhouse air. The system comprises water distribution means, e.g. sprinklers, by means of which water cooler than the dewpoint temperature of the greenhouse can be sprayed directly into the greenhouse air space. Water sprayed into the air space is allowed to fall as drops, while humidity in the greenhouse air is allowed to condense onto the drops. Finally, the drops are collected by water collection devices and discharged from the greenhouse.

### Summary of the invention

The system of WO'914 entails a number of drawbacks. Firstly, it is rather large. Consequently, it takes up a lot of precious greenhouse floor area, and it is likely to hamper access to the plants by the grower. Secondly, the proposed dehumidification process not only involves drying the air, but also cooling it. This is because the dehumidification process extracts both latent and perceptible heat from the air. The cooling of the air may typically be an undesired effect with an eye to maintaining an indoor temperature optimal for plant growth, which means that new heat may have to be generated - e.g. by burning fossil fuels - and supplied to the greenhouse. Thirdly, the mass/heat-transferring contact between the greenhouse air and the falling water drops is sub-optimal. For one, the water drops used in the process need to be large enough to fall down (if they would small enough to be suspended in the air, they would contribute to its humidification instead of dehumidification). As a result, their mass/heat-exchanging surface area is relatively small compared to their volume. Furthermore, the system and method of WO'914 are based on the deliberate decision not to employ fans, but to rely on the intrinsic movement of air in the greenhouse instead. In the context of WO'914, the movement of the air is largely due to the cooling of greenhouse air at the 'open sprinkler condensers'. However, not only may such cooling generally be undesirable (as just mentioned), to effect an air flow that warrants a continuous supply flow of fresh humid air towards the sprinklers, massive amounts of cooling-water may be necessary. Continuously displacing and cooling the water, which would be required in many geographical regions, is obviously rather costly both in cost for equipment and costs of operation.

It is an object of the present invention to provide for an energy efficient system and a corresponding method for dehumidifying air, in particular greenhouse air, which overcome or mitigate one or more of the aforementioned drawbacks.

To this end, a first aspect of the present invention is directed to a system for dehumidifying air according to claim 1. In this manner the air flow resistance in the heat exchanger will be reduced, which can result in better cooling of the air.

Please note that from GB-A-2,470,910 an air dehumidifying apparatus is known comprising an air-to-water heat exchanger having a air flow path and a physically separated water flow path which are in mutual-heat exchanging contact. The air-to-water heat exchanger may comprise a finned coil heat exchanger in which the water flows through a heat-conductive tube while the air passes across conductive fins attached to the tube.

A second aspect of the invention is directed to a greenhouse provided with a system according to the invention, wherein a plurality of local dehumidifying units are arranged throughout the greenhouse at spaced apart dehumidifying locations, all said dehumidifying units being operably connected to a single common water supply unit.

A third aspect of the present invention is directed to a method according to claim 14.

The presently disclosed system and method form an energy efficient, closed greenhouse dehumidifying solution. The solution enables the local dehumidification of greenhouse air at spaced apart dehumidifying locations within a greenhouse by locally, actively circulating greenhouse air into direct physical, intense fluid exchanging contact with cooling water (over a large mass (and thus heat) exchanging contact surface). The circulation of greenhouse air at the various dehumidifying locations may remain confined to within the greenhouse so that no warm air, including carbon dioxide (CO₂), is lost to the environment. Furthermore, no large volumes of air need to be displaced over large distances, e.g. to a central dehumidifying location; instead, comparatively small volumes of cooling-water may be supplied to each of the various local dehumidifying locations from a central water cooling location. Cooling the cooling-water centrally instead of locally allows the overall required cooling to be performed more efficiently, and additionally reduces the size and manufacturing costs of local dehumidifying units. Compact, local dehumidifying units may also enable improved control over the temperature and humidity stratification within the greenhouse. In addition, the presently proposed solution diminishes the aforementioned undesired cooling of greenhouse air by recovering perceptible heat through a heat exchange process before/after the humid greenhouse air is brought into direct physical fluid exchanging contact with the cooling-water.

These and other features and advantages of the invention will be more fully understood from the following detailed description of certain embodiments of the invention, taken together with the accompanying drawings, which are meant to illustrate and not to limit the invention.

### Brief description of the drawings

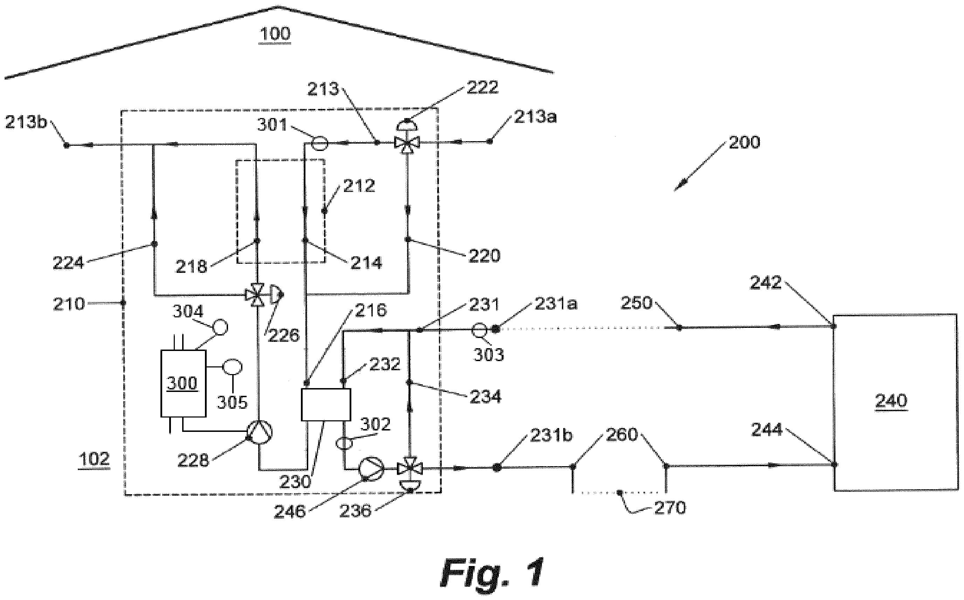

Fig. 1 schematically illustrates an exemplary embodiment of a system for dehumidifying greenhouse air according to the present invention.

### Detailed description

Fig. 1 schematically illustrates a system 200 for dehumidifying greenhouse air in a greenhouse 100. The system 200 comprises a common water supply unit 240, and at least one local dehumidifying unit or dehumidifier 210 that is operably connected thereto.

The common water supply unit 240 serves to supply the at least one local dehumidifying unit 210 connected thereto with cooling-water having a temperature below a dewpoint of the greenhouse air inside the greenhouse 100. It may typically be disposed outside of the greenhouse 100, e.g. next to it, so as not to occupy valuable greenhouse floor area. The at least one dehumidifying unit 210, which serves to locally dehumidify greenhouse air, may be disposed at a respective dehumidifying location 102 within the greenhouse 100. In case the system 200 includes a plurality of dehumidifying units 210, the units 210 may be scattered throughout the greenhouse 100 and be arranged at mutually spaced apart dehumidifying locations 102. A typical minimum distance between any two dehumidifying units 210/dehumidifying locations 102 may be on the order of several meters, e.g. five or ten meters.

The at least one dehumidifying unit 210 includes a heat exchanger 212, an air-water interfacer 230, and piping and instrumentation to run cooling-water and/or greenhouse air therethrough.

The heat exchanger 212 may serve to limit heat loss suffered by greenhouse air that is circulated through the dehumidifying unit 210, in particular by pre-cooling and post-warming greenhouse air before and after, respectively, it is run through the air-water interfacer 230. Some embodiments of the unit 210 may enable air to be channelled around instead of through the heat exchanger 212 when cooling of the greenhouse air is in fact desired, e.g. on warm days.

The air-water interfacer 230 serves to bring optionally pre-cooled air - i.e. air run through the heat exchanger 212 - into direct physical fluid exchanging contact with cooling-water supplied by the common water supply unit 240, so as to condense water vapor present in the greenhouse air and to entrain the condensate in the flow of cooling-water.

The piping scheme of the dehumidifying unit 210 includes an air channel network for channelling air through the unit. The air channel network defines a main air channel or conduit 213, which extends from an air inlet 213a to an air outlet 213b. The air inlet 213a may serve to let humid greenhouse air from the greenhouse 100 into the dehumidifying unit 210, while the air outlet 213b may serve to discharge dehumidified greenhouse air from the dehumidifying unit 210 back into the greenhouse 100. Both the air inlet 213a and the air outlet 213b may thus be externally arranged on the dehumidifying unit 210.

The main air channel 213 includes three functionally distinguishable sections that are connected in succession (i.e. successively, seen in the downstream direction) in between the air inlet 213a and the air outlet 213b: a primary 214, a secondary 216 and a tertiary 218 air channel section. The primary and tertiary air channel sections 214, 218 both run, at least partially, through the heat exchanger 212 such that they are in heat exchanging contact. The heat exchanger 212 may preferably be a counter-flow heat exchanger wherein the primary and tertiary air channel sections 214, 218 may run antiparallel. In alternative embodiments, however, the heat exchanger 212 may be of a different type, e.g. be a cross-flow heat exchanger, such that the primary and tertiary air channels 214, 218 may have a different mutual arrangement. The secondary air channel section 216, which extends in between the primary and tertiary air channel sections 214, 218, opens into the air-water interfacer 230 for supplying air into the air-water interfacer 230 (further discussed below).

The air channel network includes, besides the main air channel 213, one or more bypasses that initially branch off from and eventually merge with the main air channel. The bypasses enable a flow of greenhouse air through the main air channel 213 to be completely or partly channelled around instead of through the heat exchanger 212 by bypassing the primary and/or tertiary air channel sections 214, 218 thereof. Having a flow of greenhouse air bypass the heat exchanger 212 will typically cause the dehumidifying unit 210 to discharge cooler air back into the greenhouse 100, which may be desired when the temperature inside the greenhouse is too high. To enable bypassing of the heat exchanger 212, the unit's air channel network includes a first bypass 220 that bypasses the primary air channel section 214 and/or a second bypass 224 that bypasses the tertiary air channel section 218. Either bypass 220, 224 is associated with one or more respective control valves to alternatively direct the flow of air complete or partially through the respective bypassed air channel section 214, 218 and its respective bypass 220, 224. As in the depicted embodiment, a control valve may include a three-way valve 222, 226 via which an upstream or downstream end of the respective bypass 220, 224 is connected to the main air channel 213. The system 200 may comprise a sensor 301 for monitoring the temperature of the air flowing through the main air channel 213 and a controller 300 for controlling the respective bypass valve 222, 226. The sensor 301 for monitoring the temperature of the air flowing through the main air channel 213 is operatively connectable to said controller 300 for supplying thereto a signal indicative for the measured air temperature. The controller 300 is arranged for controlling the respective bypass valve 222, 226 based on said signal indicative for the measured air temperature. Please note that for convenience of drawing, the connection lines between the controller 300 and the respective components to which the controller is connected are only partly shown. In addition, it is remarked that the connection can also be performed in any known wireless manner.

It is noted that an air channel network that enables both the primary and the tertiary air channel sections 214, 218 to be bypassed may be preferred. This is because a heat exchanger 212 may typically involve a rather significant air flow resistance. And although providing a single bypass around either the primary 214 or the tertiary 218 air channel section may already result in both better cooling of the flow of greenhouse air and a decrease in flow resistance, an optimal reduction of the flow resistance may be realized only when the heat exchanger 212 is bypassed completely.

It is noted that the heat changer 212 may include a condensate outlet (not shown). The condensate outlet may be operably connected to the primary air channel section 214 (without forming part of the air channel network), to enable the discharge of condensate from the primary air channel section 214/the heat exchanger 212.

To drive a flow of greenhouse air through the air channel network, the latter also includes an air pump 228. In this text, the term 'air pump' may be construed broadly to include any air flow effecting device, such as economical ventilators, fans and the like. The air pump 228 may in principle be arranged at any point in the main air channel 213. In a preferred embodiment, however, the air pump 228 may be arranged between the primary and tertiary air channel sections 214, 218, i.e. 'behind' the heat exchanger 212, which may act as a muffler to reduce turbulence and vibrations in the air flow.

Furthermore, in the greenhouse 100 a temperature sensor 304 for measuring the temperature of the greenhouse air as well as a humidity sensor 305 for measuring the humidity of the greenhouse air are provided both of which are operationally connected to the controller 300 for supplying thereto a signal indicative for the measured greenhouse air temperature and humidity, respectively. The controller 300 is arranged for controlling the air pump 228 and/or the water cooling means based on said signals indicative for the measured greenhouse air temperature and humidity.

The piping scheme of the dehumidifying unit 210 further includes a water channel network for channelling water through the unit. The water channel network defines a main water channel or conduit 231, which extends from a water inlet 231a to a water outlet 231b. In between its water inlet 231a and water outlet 231b, the main water channel 231 includes a primary water channel section 232 that opens into the air-water interfacer 230 for supplying cooling-water into the air-water interfacer 230, which air-water interfacer 230 is arranged for allowing direct physical fluid exchanging contact between the air supplied into the air-water interfacer 230 and the supplied cooling water.

The secondary air channel section 216 and the primary water channel section 232 open into or may effectively merge, join or coincide within the air-water interfacer 230,to enable direct physical fluid contact providing fluid communication, i.e. mass and heat exchanging contact, between humid greenhouse air supplied by the secondary air channel section 216 and cooling-water supplied by the primary water channel section 232. The cooling-water entering the air-water interfacer 230 may preferably have a temperature below the dewpoint of the greenhouse air entering the air-water interfacer 230. Consequently, contact between the cooling-water and the greenhouse air may cause the cooling of the latter below its dewpoint. This in turn may lead to condensation of water vapor held by the greenhouse air. The condensate may simply be entrained in the flow of cooling-water to be discharged. As such the proposed process of dehumidifying greenhouse air is a clean process, which renders the operation of the dehumidifying unit 210 relatively maintenance free compared to, for instance, chemical-based dehumidifiers that may typically involve the use of aggressive desiccants, such as calcium chloride.

The air-water interfacer 230 may be implemented in various ways.

In one embodiment, for example, the air-water interfacer 230 may include a packed bed, i.e. a vessel filled with a packing material, through which physical contact between the humid greenhouse air and the cooling-water may be established. The packing material may in itself be of a conventional design and for instance include randomly arranged small objects such as Raschig rings, or, alternatively, a structured packing such as thin corrugated metal or plastic plates or gauzes. The flow of cooling-water entering the air-water interfacer 230 may be dispersed across the packing material, for instance by forcing the flow through a sprayhead or nozzle, so as to ensure that it properly wets the surface of packing to provide for a maximum of mass/heat-exchanging area. The flow of humid air may be driven across/over the wetted surface of the packing to enable mass and heat transfer. As packed beds are in themselves known in the process industry, they are not elaborated upon here in further detail.

In another embodiment, the air-water interfacer 230 may be configured to atomize the flow of cooling-water, so as to create a mist of cooling-water droplets, i.e. a uniform distribution of water droplets, and to pass the flow of humid greenhouse air through this mist to enable mass and heat transfer. In such an embodiment, the air-water interfacer 230, and more in particular the primary water channel section 232, may include an atomizer of any suitable type - e.g. an atomizer nozzle (through which the cooling-water must be forced under high pressure), a piezo-electric atomizer, an ultrasonic atomizer nozzle, etc. - configured to produce water droplets having an average diameter in a desired range. The air-water interfacer 230 may preferably be configured such that, at least where greenhouse air and cooling-water are brought into contact, the flow of cooling-water (droplets) takes place in the downward direction. That is, the flow of cooling-water inside the air-water interfacer 230 may preferably be gravity driven. As a result, cooling-water that has been brought into contact with humid air (and thus includes condensate), may easily be collected at a lower/bottom side of the air-water interfacer 230, e.g. in a water receptacle or cistern. The flow of greenhouse air may typically, but not necessarily, be directed at an angle relative to the flow of cooling-water. The two flows may, for instance, be substantially perpendicular.

Since the flow of cooling-water supplied by the common water supply unit 240 may typically be sufficiently pressurized, it may not be necessary for the dehumidifying unit 210 to include a water pump or compressor to drive the flow of cooling-water through its water channel network. Yet, in some embodiments the water channel network may include a water pump 246, in particular to enable the recycling of cooling-water within the dehumidifying unit 210 (discussed below) and/or to enable the discharge of cooling-water from the dehumidifying unit. In embodiments with a water receptacle or cistern, the water pump 246 may be arranged inside, or in fluid communication with, that receptacle to enable the pumping of water therefrom in a downstream direction. The discharge of cooling-water may, however, also be gravity driven, which could render a water pump superfluous and the dehumidifying unit more economical to manufacture. In case water pump 246 is provided for, it may preferably be arranged in the main water channel 231, at a point downstream of the air water interfacer 230.

In one embodiment of the dehumidifying unit 210, the water channel network may, besides the main water channel 231, include a loopback water channel section 234 that enables cooling-water exiting the air-water interfacer 230 to be reused. Such reuse or recycling of cooling-water may be desired when the temperature of the cooling-water upon exiting the water-air interfacer 230 is still below the dewpoint of greenhouse air entering the air-water interfacer. The loopback section 234 may branch off from the main water channel 231 at a point downstream of the air-water interfacer 230, and rejoin the main water channel 231 at a point upstream of the air water interfacer 230. It may be associated with a control valve 236, e.g. a three-way control valve, that enables the flow of cooling-water exiting the air-water interfacer 230 to be alternatively directed to the exit 231b of main water channel 231, or through the water loopback section 234. The control valve 236 may itself be controlled by the controller 300 that is operationally connected to a temperature sensor 302 to monitor the temperature of the cooling-water exiting the air-water interfacer 230, and to adjust the valve 236 to recycle cooling-water exclusively when the monitored temperature is below a predetermined dewpoint of the greenhouse air.

As mentioned, the common water supply unit 240 may serve to supply the at least one local dehumidifying unit 210 connected thereto with a (pressurized) flow of cooling-water having a temperature below a dewpoint of the greenhouse air inside the greenhouse 100.

Irrespective of its precise implementation, the common water supply unit 240 therefore includes at least one cooling-water outlet 242, which is operably connected to the water inlet 231a of the at least one dehumidifying unit 210 via a global (i.e. non-local) water supply channel 250. The water supply channel 250 is labelled 'global' because it may extend well beyond a single dehumidifying location 102 at which greenhouse air is locally dehumidified. The topology of the arrangement of the common water supply unit 240, the at least one dehumidifying unit 210 and the at least one global water supply channel 250 may vary between different embodiments of the system 200, in particular when the system includes a plurality of dehumidifying units 210. In such system embodiments different, spaced apart dehumidifying units 210 may advantageously share portions of a global water supply channel (instead of each unit having a dedicated global water supply channel), for instance in a line, ring or mesh topology.

The common water supply unit 240 may additionally include at least one cooling-water inlet 244, which may be operably connected to the water outlet 231b of the at least one dehumidifying unit 210 via a global (non-local) water return channel 260. It is understood that the global water supply channel 250, the water channel network of the at least one dehumidifying unit 210, and the global water return channel 260 do not normally form a closed circuit, which is practically impossible in continuous operation since condensate is continuously entrained in the flow of cooling-water. Accordingly, it is understood that the water return channel 260 may typically include an open water reservoir 270 or alternative (open) return path for cooling-water. In one embodiment featuring an alternative return path, for instance, the common water supply unit 240 may draw its water from the water mains at the greenhouse 100, while the at least one dehumidifying unit 210 may discharge its used cooling-water into the sewer; the return path then traces through a conventional (drinking) water cycle.

In one embodiment, the common water supply unit 240 may merely include a pump, e.g. a water well pump or a surface water pump, that draws suitably cool water from a water well or a surface water source, e.g. a lake or river. In a preferred embodiment, however, the common water supply unit 240 may additionally include water cooling means for cooling-water to below the dewpoint of the greenhouse air before supplying it to the at least one dehumidifying unit 210. In one such embodiment, for instance, the water cooling means may include a cooling tower. In another embodiment, the common water supply unit may include an in itself conventional thermally and/or electrically powered heat pump of any suitable type. A heat pump may be less dependent on the outside temperature, and offer an extra advantage over a cooling tower in that it requires less or no air to be displaced. The water cooling means may preferably be configured to be connected to a local, thermodynamically efficient cogeneration plant; most greenhouse complexes have such a plant available as they depend on it for their energy requirements. Preferably, in case the common water supply unit 240 includes water cooling means for cooling-water, the system comprises a further sensor 303 operationally connected to the controller 300 which further sensor 303 is arranged for monitoring the temperature of the cooling water entering the water inlet 231a. The controller 300 is then provided for controlling the water cooling means and arranged for receiving a signal indicative for the measured cooling water temperature from the further temperature sensor 303. The controller 300 for controlling the water cooling means is then advantageously arranged for controlling the cooling means based on the signal indicative for the measured cooling water temperature and preferably also the signal indicative for the measured air temperature. In this manner cooling-water having a temperature below a dewpoint of the greenhouse air inside the greenhouse 100 can be provided automatically and consistently.

Although illustrative embodiments of the present invention have been described above, in part with reference to the accompanying drawings, it is to be understood that the invention is not limited to these embodiments. For example, the inventive system has been described with reference to dehumidifying greenhouse air, but it will be evident that the inventive system is also suitable for dehumidifying air present in other rooms, buildings or in general enclosed environments. Variations to the disclosed embodiments can be understood and effected by those skilled in the art in practicing the claimed invention, from a study of the drawings, the disclosure, and the appended claims. Reference throughout this specification to "one embodiment" or "an embodiment" means that a particular feature, structure or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, it is noted that particular features, structures, or characteristics of one or more embodiments may be combined in any suitable manner to form new, not explicitly described embodiments.

**List of elements**

| | | |
|---|---|---|
| 100 | Greenhouse | |
| 102 | dehumidifying location | |
| 200 | System | |
| 210 | dehumidifying unit | |
| 212 | heat exchanger | |
| 213 | main air channel / conduit | main air flow path |
| 213a,b | air inlet (a) and air outlet (b) | air flow path starting point (a) and end point (b) |
| 214 | primary air channel section | primary air flow path section |
| 216 | secondary air channel section | secondary air flow path section |
| 218 | tertiary air channel section | tertiary air flow path section |
| 220 | bypass air channel section (for primary air channel section) | |
| 222 | bypass valve | |
| 224 | bypass air channel section (for tertiary air channel section) | |
| 226 | bypass valve | |
| 228 | air pump | |
| 230 | air-water interfacer | air-water interface region |
| 231 | main water channel / conduit | main water flow path |
| 231a,b | water inlet (a) and outlet (b) | water flow path starting point (a) and end point (b) |
| 232 | primary water channel section | primary water flow path section |
| 234 | loopback water channel section | |
| 236 | loopback valve | |
| 240 | common water supply unit | |
| 242 | cooling-water outlet | |
| 244 | water inlet | |
| 246 | water pump | |
| 250 | global water supply channel | global water supply path |
| 260 | global water return channel | global water return path |
| 270 | open water reservoir | open return path |
| 300 | controller | |
| 301 | temperature sensor | |
| 302 | temperature sensor | |
| 303 | temperature sensor | |
| 304 | temperature sensor | |
| 305 | humidity sensor | |

## Claims

1. A system (200) for dehumidifying air, comprising:
• at least one local dehumidifying unit (210), comprising:
∘ an air channel network including a main air channel (213) that extends from an air inlet (213a) to an air outlet (213b), and that successively includes a primary air channel section (214), a secondary air channel section (216), and a tertiary air channel section (218);
∘ an air pump (228) that is arranged inside the main air channel (213) and configured to effect a flow of air therethrough;
∘ a water channel network including a main water channel (231) that extends from a water inlet (231a) to a water outlet (231b), and that includes a primary water channel section (232);
∘ a heat exchanger (212) in which said primary and tertiary air channel sections (214, 218) are arranged in heat exchanging contact; and
a common water supply unit (240) configured to provide for a flow of cooling-water, and including at least one cooling-water outlet (242) that is operably connected to the water inlet (231a) of the at least one local dehumidifier (210), wherein the system further comprises an air-water interfacer (230), said secondary air channel section (216) opening into the air-water interfacer (230) for supplying air into the air-water interfacer (230), said primary water channel section (232) opening into the air-water interfacer (230) for supplying cooling-water into the air-water interfacer (230), said air-water interfacer (230) being arranged for allowing direct physical fluid exchanging contact between the supplied air and the supplied cooling water, wherein the air channel network further includes:
• at least one bypass air channel section (220, 224) that branches off from the main air channel (213) to extend around the heat exchanger (212) and to eventually rejoin the main air channel (213), and that provides for a bypass around one of the primary air channel section (214) and the tertiary air channel section (218);
• at least one bypass valve (222, 226), associated with the bypass air channel section (220, 224), and configured to enable the flow of air through the main air channel (213) to be alternatively switched between the bypassed air channel section (214, 218) and the bypass air channel section (220, 224).

2. The system according to claim 1, wherein the air-water interfacer (230) includes a packed bed configured to bring the flow of cooling-water through the main water channel (231) into fluid exchanging contact with the flow of air through the main air channel (213).

3. The system according to claim 1 or 2, wherein the air-water interfacer (230) includes a water atomizer that is arranged in the primary water channel section (232), upstream of an air-water interface region, and that is configured to atomize the flow of cooling-water through the primary water channel section to as to inject a mist of cooling-water droplets in said air-water interface region, and
wherein secondary air channel section (216) through the air water interfacer (230) is configured such that the flow of air is led through the mist of cooling-water droplets in said air-water interface region.

4. The system according to any of the claims 1-3, wherein the air pump (228) is arranged in between the primary and tertiary air channel sections (214, 218).

5. The system according to any of the claims 1-4, wherein the system comprises a sensor (301) for monitoring the temperature of the air flowing through the main air channel (213), and a controller (300) for controlling the at least one bypass valve (222, 226), said sensor (301) for monitoring the temperature of the air flowing through the main air channel (213) being operatively connectable to said controller (300) for supplying thereto a signal indicative for the measured air temperature, said controller (300) being arranged for controlling the at least one bypass valve (222, 226) based on said signal indicative for the measured air temperature.

6. The system according to any one of the preceding claims, wherein the air channel network includes two bypass air channel sections (200, 224) that provide for respective bypasses around the primary and tertiary air channel sections (214, 218), each bypass air channel section (200, 224) being associated with a respective bypass valve (226, 236) that is configured to enable the flow of air through the main air channel (213) to be alternatively switched between the respective bypassed air channel section (214, 218) and the respective bypass air channel section (220, 224).

7. The system according to any of the claims 1-6, wherein the heat exchanger (212) is a counter-flow heat exchanger.

8. The system according to any of the claims 1-7, wherein the water channel network further includes:
• at least one loopback water channel section (234) that branches off from the main water channel (231) at a point downstream of the air-water interfacer (230) and that rejoins the main water channel (231) at a point upstream of the air-water interfacer; and
• at least one loopback valve (236), associated with the loopback water channel section (234), and configured to enable the flow of cooling-water through the main water channel (231) exiting the air-water interfacer (230) to be alternatively looped back into the air-water interfacer (230) via the loopback water channel section (234) or discharged to the water outlet (231b) of the main water channel (231).

9. The system according to claim 8, wherein the system comprises a sensor (302) for monitoring the temperature of the cooling water exiting the air-water interfacer (230) and a controller (300) for controlling the at least one loopback valve (236), said sensor (302) for monitoring the temperature of the cooling water exiting the air-water interfacer (230) being operatively connectable to said controller (300) for supplying thereto a signal indicative for the measured cooling water temperature, said controller (300) being arranged for controlling the at least one loopback valve (236) based on said signal indicative for the measured cooling water temperature.

10. The system according to claim 5 or any one of the claims 6 to 9 when dependent on claim 5, wherein the common water supply unit (240) includes water cooling means for cooling-water, the system comprises a further sensor (303) for monitoring the temperature of the cooling water entering the water inlet (231a) and a controller (300) for controlling the water cooling means, said further sensor (303) for monitoring the temperature of the cooling water entering the water inlet (231a) being operatively connectable to said controller (300) for controlling the water cooling means for supplying thereto a signal indicative for the measured cooling water temperature, said controller (300) for controlling the water cooling means being arranged for controlling the cooling means based on said signal indicative for the measured cooling water temperature and said signal indicative for the measured air temperature.

11. A system according to any one of the preceding claims, wherein the system comprises a temperature sensor (304) for measuring the temperature of the air to be dehumidified as well as a humidity sensor (305) for measuring the humidity of the air to be dehumidified, both of which are operationally connected to the controller (300) for supplying thereto a signal indicative for the measured air temperature and humidity, respectively, said controller (300) being arranged for controlling the air pump (228) based on said signals indicative for the measured air temperature and humidity.

12. A system according to claims 10 or 11, wherein the system comprises a temperature sensor (304) for measuring the temperature of the air to be dehumidified as well as a humidity sensor (305) for measuring the humidity of the air to be dehumidified, both of which are operationally connected to the controller (300) for supplying thereto a signal indicative for the measured air temperature and humidity, respectively, wherein said controller (300) is arranged for controlling the water cooling means based on said signals indicative for the measured air temperature and humidity.

13. A greenhouse (100) provided with a system (200) according to any of the claims 1-12, wherein a plurality of local dehumidifying units (210) are arranged throughout the greenhouse (100) at spaced apart dehumidifying locations (102), all said dehumidifying units (210) being operably connected to a single common water supply unit (240).

14. A method for dehumidifying air in a greenhouse (100) according to claim 13, comprising:
• at a dehumidifying location (102) in the greenhouse (100), effecting a local flow of greenhouse air along a main air flow path (213) extending from an air flow path starting point (213a) located inside the greenhouse to an air flow path end point (213b) located inside the greenhouse, and, in between said air flow path starting and end points (213a, 213b), successively including a primary air flow path section (214), a secondary air flow path section (216), and a tertiary air flow path section (218),
wherein greenhouse air flowing along the primary air flow path section (214) is in heat exchanging contact with air flowing along the tertiary air flow path section (218); and
• at said dehumidifying location (102), effecting a flow of cooling-water along a main water flow path (231) and defining an air-water interface region (230) where cooling-water flowing along the main water flow path (231) is in direct physical fluid exchanging contact with greenhouse air flowing along the secondary air flow path section (216), and
wherein the method comprises the step of at said dehumidifying location (102) effecting a bypass flow of greenhouse air through the main air channel (213) completely or partly around the heat exchanger (212) by bypassing the primary and/or tertiary air channel sections (214, 218) thereof.

15. The method according to claim 14, wherein cooling-water entering the air-water interface region (230) is cooled to a temperature below a dewpoint of the greenhouse air entering the air-water interface region (230), such that their mutual fluid exchanging contact in the air-water interface region effects condensation of water present in the greenhouse air, and entrainment of the condensate in the flow of cooling-water.

16. The method according to claims 14 or 15, wherein cooling-water and greenhouse air in the air-water interface (230) region are brought in direct physical fluid exchanging contact through a packed bed.

17. The method according to any of the claims 14-16, further comprising:
• in or just upstream of said air-water interface region (230) atomizing the flow of cooling-water, such that, in said air-water interface region, greenhouse air flows through a mist of cooling-water droplets.

18. The method according to any of the claims 14-17, comprising:
• at a plurality of spaced apart dehumidifying locations (102) in the greenhouse (100), effecting respective local flows of air along respective main air flow paths (213), each main air flow path extending from an air flow path starting point (213a) located inside the greenhouse to an air flow path end point (213b) located inside the greenhouse, and, in between said air flow path starting and end points (213a, 213b), successively including a primary air flow path section (214), a secondary air flow path section (216), and a tertiary air flow path section (218),
wherein, for each respective main air flow path (213), air flowing along the primary air flow path section (214) is in heat exchanging contact with air flowing along the tertiary air flow path section (218);
• at said plurality of spaced apart dehumidifying locations (102), effecting respective flows of cooling-water along respective main water flow paths (231), each local water flow path defining an air-water interface region (230) where cooling-water flowing along the respective local water flow path is in fluid exchanging contact with greenhouse air flowing along the secondary air flow path section (216) of the respective main air flow path (213); and
• from a common location, supplying flows of cooling-water to the respective dehumidifying locations (102) along respective global water supply paths (250) that form upstream extensions of the respective local main water flow paths (231).

## Patentansprüche

1. System (200) zur Luftentfeuchtung, umfassend:
• mindestens eine lokale Entfeuchtungseinheit (210), umfassend:
∘ ein Luftkanalnetzwerk mit einem Hauptluftkanal (213), der von einem Lufteinlass (213a) zu einem Luftauslass (213b) verläuft und der nacheinander einen primären Luftkanalabschnitt (214), einen sekundären Luftkanalabschnitt (216) und einen tertiären Luftkanalabschnitt (218) umfasst;
∘ eine Luftpumpe (228), die in dem Hauptluftkanal (213) angeordnet ist und konfiguriert ist, um einen Strom von Luft durch diesen zu bewerkstelligen;
∘ ein Wasserkanalnetzwerk mit einem Hauptwasserkanal (231), der von einem Wassereinlass (231a) zu einem Wasserauslass (231b) verläuft und der einen primären Wasserkanalabschnitt (232) umfasst;
∘ einen Wärmetauscher (212), in dem die primären und tertiären Luftkanalabschnitte (214, 218) in Wärmetauschkontakt angeordnet sind; und
eine gemeinsame Wasserzufuhreinheit (240), konfiguriert zum Bereitstellen eines Stroms von Kühlwasser und umfassend mindestens einen Kühlwasserauslass (242), der betriebsfähig mit dem Wassereinlass (231a) des mindestens einen lokalen Entfeuchters (210) verbunden ist, wobei das System ferner einen Luft-Wasser-Interfacer (230) umfasst, welcher sekundäre Luftkanalabschnitt (216) in dem Luft-Wasser-Interfacer (230) mündet, um Luft in den Luft-Wasser-Interfacer (230) einzuführen, welcher primäre Wasserkanalabschnitt (232) in den Luft-Wasser-Interfacer (230) mündet, um Luft in den Luft-Wasser-Interfacer (230) einzuführen, welcher Luft-Wasser-Interfacer (230) angeordnet ist, um direkten physischen Flüssigkeitsaustauschkontakt zwischen der zugeführten Luft und dem zugeführten Kühlwasser zu ermöglichen, wobei das Luftkanalnetzwerk ferner umfasst:
• mindestens einen Bypass-Luftkanalabschnitt (220, 224) der von dem Hauptluftkanal (213) abzweigt, um um den Wärmetauscher (212) herum zu verlaufen und sich eventuell wieder mit dem Hauptluftkanal (213) zu vereinigen, und der für einen Bypass um einen von dem primären Luftkanalabschnitt (214) und dem tertiären Luftkanalabschnitt (218) sorgt;
• mindestens ein Bypassventil (222, 226), das zu dem Bypass-Luftkanalabschnitt (220, 224) gehört und konfiguriert ist, um es zu ermöglichen, dass der Strom von Luft durch den Hauptluftkanal (213) abwechselnd wischen dem umgangenen Luftkanalabschnitt (214, 218) und dem Bypass-Luftkanalabschnitt (220, 224) umgeschaltet wird.

2. System nach Anspruch 1, wobei der Luft-Wasser-Interfacer (230) ein Festbett umfasst, konfiguriert, um den Strom von Kühlwasser durch den Hauptwasserkanal (231) in Flüssigkeitsaustauschkontakt mit dem Strom von Luft durch den Hauptluftkanal (213) zu bringen.

3. System nach Anspruch 1 oder 2, wobei der Luft-Wasser-Interfacer (230) einen Wasserzerstäuber umfasst, der in dem primären Wasserkanalabschnitt (232) stromaufwärts von einem Luft-Wasser-Schnittstellenbereich angeordnet ist und der konfiguriert ist, um den Strom von Kühlwasser durch den primären Wasserkanalabschnitt zu zerstäuben, um einen Nebel von Kühlwassertröpfchen in den Luft-Wasser-Schnittstellenbereich zu injizieren, und
wobei der sekundäre Luftkanalabschnitt (216) durch den Luft-Wasser-Interfacer (230) so konfiguriert ist, dass der Strom von Luft durch den Nebel von Kühlwassertröpfchen in den Luft-Wasser-Schnittstellenbereich geleitet wird.

4. System nach einem der Ansprüche 1-3, wobei die Luftpumpe (228) zwischen den primären und tertiären Luftkanalabschnitten (214, 218) angeordnet ist.

5. System nach einem der Ansprüche 1-4, wobei das System einen Sensor (301) zur Überwachung der Temperatur der Luft, die durch den Hauptluftkanal (213) strömt, und einen Regler (300) zum Regeln des mindestens einen Bypassventils (222, 226) umfasst, welcher Sensor (301) zur Überwachung der Temperatur der Luft, die durch den Hauptluftkanal (213) strömt, betriebsfähig mit dem Regler (300) verbunden werden kann, um diesem ein Signal zu liefern, das anzeigend für die gemessene Lufttemperatur ist, welcher Regler (300) angeordnet ist zum Regeln des mindestens einen Bypassventils (222, 226) auf der Basis des Signals, das anzeigend für die gemessene Lufttemperatur ist.

6. System nach einem der vorhergehenden Ansprüche, wobei das Luftkanalnetzwerk zwei Bypass-Luftkanalabschnitte (200, 224) umfasst, die für entsprechende Umgehungen um die primären und tertiären Luftkanalabschnitte (214, 218) sorgt, jeder Bypass-Luftkanalabschnitt (200, 224) verbunden mit einem entsprechenden Bypassventil (226, 236), das konfiguriert ist, um es zu ermöglichen, dass der Strom von Luft durch den Hauptluftkanal (213) abwechselnd zwischen dem entsprechenden umgangenen Luftkanalabschnitt (214, 218) und dem entsprechenden Bypass-Luftkanalabschnitt (220, 224) umgeschaltet wird.

7. System nach einem der Ansprüche 1-6, wobei der Wärmetauscher (212) ein Gegenstrom-Wärmetauscher ist.

8. System nach einem der Ansprüche 1-7, wobei das Wasserkanalnetzwerk ferner umfasst:
• mindestens einen Loopback-Wasserkanalabschnitt (234), der von dem Hauptwasserkanal (231) an einer Stelle stromabwärts von dem Luft-Wasser-Interfacer (230) abzweigt und sich an einer Stelle stromaufwärts von dem Luft-Wasser-Interfacer wieder mit dem Hauptwasserkanal (231) vereint; und
• mindestens ein Loopback-Ventil (236), verbunden mit dem Loopback-Wasserkanalabschnitt (234) und konfiguriert, um es zu ermöglichen, dass der Strom von Kühlwasser durch den Hauptwasserkanal (231) den Luft-Wasser-Interfacer (230) verlässt, um alternativ in den Luft-Wasser-Interfacer (230) über den Loopback-Wasserkanalabschnitt (234) zurückgeführt zu werden oder zu dem Wasserauslass (231b) des Hauptwasserkanals (231) abgeführt zu werden.

9. System nach Anspruch 8, wobei das System einen Sensor (302) zur Überwachung der Temperatur des Kühlwassers, das den Luft-Wasser-Interfacer (230) verlässt, und einen Regler (300) zum Regeln des mindestens einen Loopback-Ventils (236) umfasst, welcher Sensor (302) zur Überwachung der Temperatur des Kühlwassers, das den Luft-Wasser-Interfacer (230) verlässt, betriebsfähig mit dem Regler (300) verbunden werden kann, um diesem ein Signal zu liefern, das anzeigend für die gemessene Kühlwassertemperatur ist, welcher Regler (300) angeordnet ist, um das mindestens eine Loopback-Ventil (236) auf der Basis des Signals, das anzeigend für die gemessene Kühlwassertemperatur ist, zu regeln.

10. System nach Anspruch 5 oder einem der Ansprüche 6 bis 9, wenn abhängig von Anspruch 5, wobei die gemeinsame Wasserzufuhreinheit (240) Wasserkühlmittel für Kühlwasser umfasst, das System einen weiteren Sensor (303) zur Überwachung der Temperatur des Kühlwassers, das in den Wassereinlass (231a) eintritt, und einen Regler (300) zum Regeln der Wasserkühlmittel umfasst, welcher weitere Sensor (303) zur Überwachung der Temperatur des Kühlwassers, das in den Wassereinlass (231a) eintritt, betriebsfähig mit dem Regler (300) zum Regeln der Wasserkühlmittel verbunden werden kann, um diesem ein Signal zu liefern, das anzeigend für die gemessene Kühlwassertemperatur ist, welcher Regler (300) zum Regeln der Wasserkühlmittel angeordnet ist, um die Kühlmittel auf der Basis des Signals, das anzeigend für die gemessene Kühlwassertemperatur ist, und des Signals, das anzeigend für die gemessene Lufttemperatur ist, zu regeln.

11. System nach einem der vorhergehenden Ansprüche, wobei das System einen Temperatursensor (304) zum Messen der Temperatur der zu entfeuchtenden Luft sowie einen Feuchtigkeitssensor (305) zum Messen der Feuchtigkeit der zu entfeuchtenden Luft umfasst, von denen beide betriebsfähig mit dem Regler (300) verbunden sind, um diesem ein Signal zu liefern, das anzeigend für die gemessene Lufttemperatur bzw. -feuchtigkeit ist, welcher Regler (300) angeordnet ist zum Regeln der Luftpumpe (228) auf der Basis der Signale die anzeigend für die gemessene Lufttemperatur und - feuchtigkeit sind.

12. System nach den Ansprüchen 10 oder 11, wobei das System einen Temperatursensor (304) zum Messen der Temperatur der zu entfeuchtenden Luft sowie einen Feuchtigkeitssensor (305) zum Messen der Feuchtigkeit der zu entfeuchtenden Luft umfasst, von denen beide betriebsfähig mit dem Regler (300) verbunden sind, um diesem ein Signal zu liefern, das anzeigend für die gemessene Lufttemperatur bzw. -feuchtigkeit ist, wobei der Regler (300) angeordnet ist zum Regeln der Wasserkühlmittel auf der Basis der Signale, die anzeigend für die gemessene Lufttemperatur und -feuchtigkeit sind.

13. Treibhaus (100), versehen mit einem System (200) nach einem der Ansprüche 1-12, wobei eine Vielzahl lokaler Entfeuchtungseinheiten (210) durch das Treibhaus (100) an beabstandeten Entfeuchtungsorten (102) angeordnet sind, wobei alle der Entfeuchtungseinheiten (210) betriebsfähig mit einer einzigen gemeinsamen Wasserzufuhreinheit (240) verbunden sind.

14. Verfahren zur Entfeuchtung von Luft in einem Treibhaus (100) nach Anspruch 13, umfassend:
• an einem Entfeuchtungsort (102) in dem Treibhaus (100), das Bewerkstelligen eines Stroms von Treibhausluft entlang eines Hauptluftstromwegs (213), verlaufend von einem Luftstromwegstartpunkt (213a), der sich in dem Treibhaus befindet, zu einem Luftstromwegendpunkt (213b), der sich in dem Treibhaus befindet, und zwischen den Luftstromstart- und -endpunkten (213a, 213b) nacheinander umfassend einen primären Luftstromwegabschnitt (214), einen sekundären Luftstromwegabschnitt (216) und einen tertiären Luftstromwegabschnitt (218),
wobei Treibhausluft, die entlang des primären Luftstromwegabschnitts (214) strömt, in Wärmeaustauschkontakt mit Luft ist, die entlang des tertiären Luftstromwegabschnitts (218) strömt; und
• an dem Entfeuchtungsort (102), das Bewerkstelligen eines Stroms von Kühlwasser entlang eines Hauptwasserstromwegs (231) und Definieren eines Luft-Wasser-Schnittstellenbereichs (230), wo Kühlwasser, das entlang des Hauptwasserstromwegs (231) strömt, in direktem physischen Flüssigkeitsaustauschkontakt mit Treibhausluft, die entlang des sekundären Luftstromwegabschnitts (216) strömt, ist, und
wobei das Verfahren den Schritt umfasst, in dem an dem Entfeuchtungsort (102) ein Bypassstrom von Treibhausluft durch den Hauptluftkanal (213) vollständig oder teilweise um den Wärmetauscher (212) herum bewerkstelligt wird, indem die primären und/oder tertiären Luftkanalabschnitte (214, 218) von diesem umgangen werden.

15. Verfahren nach Anspruch 14, wobei Kühlwasser, das in den Luft-Wasser-Schnittstellenbereich (230) eintritt, auf eine Temperatur unter einem Taupunkt der Treibhausluft, die in den Luft-Wasser-Schnittstellenbereich (230) eintritt, zu kühlen, sodass ihr gegenseitiger Flüssigkeitsaustauschkontakt in dem Luft-Wasser-Schnittstellenbereich die Kondensation von Wasser, vorhanden in der Treibhausluft beeinflusst und Mitführen des Kondensats in dem Strom von Kühlwasser.

16. Verfahren nach den Ansprüchen 14 oder 15, wobei Kühlwasser und Treibhausluft in dem Luft-Wasser-Schnittstellenbereich (230) in direkten physischen Flüssigkeitsaustauschkontakt durch ein Festbett gebracht werden.

17. Verfahren nach einem der Ansprüche 14-16, ferner umfassend:
• in oder genau stromaufwärts von dem Luft-Wasser-Schnittstellenbereich (230) das Zerstäuben des Stroms von Kühlwasser, sodass in dem Luft-Wasser-Schnittstellenbereich Treibhausluft durch einen Nebel von Kühlwassertröpfchen strömt.

18. Verfahren nach einem der Ansprüche 14-17, umfassend:
• an einer Vielzahl von beabstandeten Entfeuchtungsorten (102) in dem Treibhaus (100), das Bewerkstelligen entsprechender lokaler Ströme von Luft entlang entsprechender Hauptluftstromwege (213), jeder Hauptluftstromweg verlaufend von einem Luftstromwegstartpunkt (213a), der sich in dem Treibhaus befindet, zu einem Luftstromwegendpunkt (213b), der sich in dem Treibhaus befindet, nacheinander umfassend einen primären Luftstromwegabschnitt (214), einen sekundären Luftstromwegabschnitt (216) und einen tertiären Luftstromwegabschnitt (218),
wobei für jeden entsprechenden Hauptluftstromweg (213) Luft, die entlang des primären Luftstromwegabschnitts (214) strömt, in Wärmeaustauschkontakt mit Luft, die entlang des tertiären Luftstromwegabschnitts (218) strömt;
• an der Vielzahl beabstandeter Entfeuchtungsorte (102), das Bewerkstelligen entsprechender Ströme von Kühlwasser entlang entsprechender Hauptwasserstromwege (231), jeder lokale Wasserstromweg definierend einen Luft-Wasser-Schnittstellenbereich (230), wo Kühlwasser, das entlang des entsprechenden lokalen Wasserstromwegs strömt, in Flüssigkeitsaustauschkontakt mit Treibhausluft ist, die entlang des sekundären Luftstromwegabschnitts (216) des entsprechenden Hauptluftstromwegs (213) strömt; und
• von einem gemeinsamen Ort das Zuführen von Strömen von Kühlwasser zu den entsprechenden Entfeuchtungsorten (102) entlang entsprechender globaler Wasserzufuhrwege (250), die Stromaufwärtsverlängerungen der entsprechenden lokalen Hauptwasserstromwege (231) bilden.

## Revendications

1. Système (200) pour déshumidifier de l'air, comprenant :
• au moins une unité de déshumidification locale (210), comprenant :
∘ un réseau de canal d'air comprenant un canal d'air principal (213) qui s'étend d'une entrée d'air (213a) jusqu'à une sortie d'air (213b), et qui comprend successivement une section de canal d'air primaire (214), une section de canal d'air secondaire (216), et une section de canal d'air tertiaire (218) ;
∘ une pompe à air (228) qui est agencée à l'intérieur du canal d'air principal (213) et configurée pour provoquer un écoulement d'air à travers celui-ci ;
∘ un réseau de canal d'eau comprenant un canal d'eau principal (231) qui s'étend d'une entrée d'eau (231a) jusqu'à une sortie d'eau (231b), et qui comprend une section de canal d'eau primaire (232) ;
∘ un échangeur de chaleur (212) dans lequel lesdites sections de canal d'air primaire et tertiaire (214, 218) sont disposées en contact d'échange de chaleur ; et
une unité d'alimentation en eau commune (240) configurée pour fournir un écoulement d'eau de refroidissement, et comprenant au moins une sortie d'eau de refroidissement (242) qui est connectée de manière opérationnelle à l'entrée d'eau (231a) du au moins un déshumidificateur local (210), le système comprenant en outre une interface air-eau (230), ladite section de canal d'air secondaire (216) débouchant dans l'interface air-eau (230) pour alimenter de l'air dans l'interface air-eau (230), ladite section de canal d'eau primaire (232) débouchant dans l'interface air-eau (230) pour alimenter de l'eau de refroidissement dans l'interface air-eau (230), ladite interface air-eau (230) étant agencée pour permettre un contact d'échange de fluide physique direct entre l'air alimenté et l'eau de refroidissement alimentée, dans lequel le réseau de canal d'air comprend en outre :
• au moins une section de canal d'air de dérivation (220, 224) qui se sépare du canal d'air principal (213) pour s'étendre autour de l'échangeur de chaleur (212) et rejoindre éventuellement le canal d'air principal (213), et qui fournit une dérivation autour d'une section parmi la section de canal d'air primaire (214) et la section de canal d'air tertiaire (218) ;
• au moins une vanne de dérivation (222, 226), associée à la section de canal d'air de dérivation (220, 224), et configurée pour permettre à l'écoulement d'air à travers le canal d'air principal (213) d'être permuté de manière alternée entre la section canal d'air contournée (214, 218) et la section de canal d'air de dérivation (220, 224).

2. Système selon la revendication 1, dans lequel l'interface air-eau (230) comprend un lit garni configuré pour amener l'écoulement d'eau de refroidissement à travers le canal d'eau principal (231) en contact d'échange de fluide avec l'écoulement d'air à travers le canal d'air principal (213).

3. Système selon la revendication 1 ou 2, dans lequel l'interface air-eau (230) comprend un atomiseur d'eau qui est disposé dans la section de canal d'eau primaire (232), en amont d'une région d'interface air-eau, et qui est configuré pour atomiser l'écoulement d'eau de refroidissement à travers la section de canal d'eau primaire de manière à injecter une brume de gouttelettes d'eau de refroidissement dans ladite région d'interface air-eau, et
dans lequel la section de canal d'air secondaire (216) à travers l'interface air-eau (230) est configurée de telle sorte que l'écoulement d'air est dirigé à travers la brume de gouttelettes d'eau de refroidissement dans ladite région d'interface air-eau.

4. Système selon l'une quelconque des revendications 1-3, dans lequel la pompe à air (228) est disposée entre les sections de canal d'air primaire et tertiaire (214, 218).

5. Système selon l'une quelconque des revendications 1-4, dans lequel le système comprend un capteur (301) pour surveiller la température de l'air circulant à travers le canal d'air principal (213), et un dispositif de commande (300) pour commander la au moins une vanne de dérivation (222, 226), ledit capteur (301) pour surveiller la température de l'air circulant à travers le canal d'air principal (213) pouvant être connecté de manière opérationnelle audit dispositif de commande (300) pour lui fournir un signal indicatif de la température d'air mesurée, ledit dispositif de commande (300) étant conçu pour commander la au moins une vanne de dérivation (222, 226) sur la base dudit signal indicatif de la température d'air mesurée.

6. Système selon l'une quelconque des revendications précédentes, dans lequel le réseau de canal d'air comprend deux sections de canal d'air de dérivation (200, 224) qui fournissent des dérivations respectives autour des sections de canal d'air primaire et tertiaire (214, 218), chaque section de canal d'air de dérivation (200, 224) étant associée à une vanne de dérivation respective (226, 236) qui est configurée pour permettre à l'écoulement d'air à travers le canal d'air principal (213) d'être permuté de manière alternée entre la section de canal d'air contournée respective (214, 218) et la section de canal d'air de dérivation respective (220, 224).

7. Système selon l'une quelconque des revendications 1-6, dans lequel l'échangeur de chaleur (212) est un échangeur de chaleur à contre-courant.

8. Système selon l'une quelconque des revendications 1-7, dans lequel le réseau de canal d'eau comprend en outre :
• au moins une section de canal d'eau de rebouclage (234) qui se sépare du canal d'eau principal (231) à un point situé en aval de l'interface air-eau (230) et qui rejoint le canal d'eau principal (231) à un point situé en amont de l'interface air-eau ; et
• au moins une vanne de rebouclage (236), associée à la section de canal d'eau de rebouclage (234), et configurée pour permettre à l'écoulement d'eau de refroidissement à travers le canal d'eau principal (231) de sortir de l'interface air-eau (230) pour être alternativement remis en boucle dans l'interface air-eau (230) via la section de canal d'eau de rebouclage (234) ou déchargé dans la sortie d'eau (231b) du canal d'eau principal (231).

9. Système selon la revendication 8, dans lequel le système comprend un capteur (302) pour surveiller la température de l'eau de refroidissement sortant de l'interface air-eau (230) et un dispositif de commande (300) pour commander la au moins une vanne de rebouclage (236), ledit capteur (302) pour surveiller la température de l'eau de refroidissement sortant de l'interface air-eau (230) pouvant être connecté de manière opérationnelle audit dispositif de commande (300) pour lui fournir un signal indicatif de la température d'eau de refroidissement mesurée, ledit dispositif de commande (300) étant conçu pour commander la au moins une vanne de rebouclage (236) sur la base dudit signal indicatif de la température d'eau de refroidissement mesurée.

10. Système selon la revendication 5 ou l'une quelconque des revendications 6 à 9 lorsqu'elles dépendent de la revendication 5, dans lequel l'unité d'alimentation en eau commune (240) comprend des moyens de refroidissement par eau pour l'eau de refroidissement, le système comprend un capteur supplémentaire (303) pour surveiller la température de l'eau de refroidissement entrant dans l'entrée d'eau (231a) et un dispositif de commande (300) pour commander les moyens de refroidissement par eau, ledit capteur supplémentaire (303) pour surveiller la température de l'eau de refroidissement entrant dans l'entrée d'eau (231a) pouvant être connecté de manière opérationnelle audit dispositif de commande (300) pour commander les moyens de refroidissement par eau pour lui fournir un signal indicatif de la température d'eau de refroidissement mesurée, ledit dispositif de commande (300) pour commander les moyens de refroidissement par eau étant conçu pour commander les moyens de refroidissement sur la base dudit signal indicatif de la température d'eau de refroidissement mesurée et dudit signal indicatif de la température d'air mesurée.

11. Système selon l'une quelconque des revendications précédentes, dans lequel le système comprend un capteur de température (304) pour mesurer la température de l'air à déshumidifier ainsi qu'un capteur d'humidité (305) pour mesurer l'humidité de l'air à déshumidifier, tous deux étant connectés de manière opérationnelle au dispositif de commande (300) pour lui fournir un signal indicatif respectivement de la température et de l'humidité d'air mesurées, ledit dispositif de commande (300) étant conçu pour commander la pompe à air (228) sur la base desdits indicateurs indicatifs de la température et de l'humidité d'air mesurées.

12. Système selon les revendications 10 ou 11, dans lequel le système comprend un capteur de température (304) pour mesurer la température de l'air à déshumidifier ainsi qu'un capteur d'humidité (305) pour mesurer l'humidité de l'air à déshumidifier, tous deux étant connectés de manière opérationnelle au dispositif de commande (300) pour lui fournir un signal indicatif respectivement de la température et de l'humidité d'air mesurées, ledit dispositif de commande (300) étant conçu pour commander les moyens de refroidissement par eau sur la base desdits signaux indicatifs de la température et de l'humidité d'air mesurées.

13. Serre (100) munie d'un système (200) selon l'une quelconque des revendications 1-12, dans laquelle une pluralité d'unités de déshumidification locales (210) sont disposées à travers toute la serre (100) à des emplacements de déshumidification espacés (102), toutes lesdites unités de déshumidification (210) étant connectées de manière opérationnelle à une unité d'alimentation en eau commune unique (240).

14. Méthode de déshumidification d'air dans une serre (100) selon la revendication 13, comprenant :
• à un emplacement de déshumidification (102) dans la serre (100), provoquer un écoulement local d'air de serre le long d'un trajet d'écoulement d'air principal (213) s'étendant d'un point de départ de trajet d'écoulement d'air (213a) situé à l'intérieur de la serre jusqu'à un point final de trajet d'écoulement d'air (213b) situé à l'intérieur de la serre, et, entre lesdits point de départ et final de trajet d'écoulement d'air (213a, 213b), comprenant successivement une section de trajet d'écoulement d'air primaire (214), une section de trajet d'écoulement secondaire (216), et une section de trajet d'écoulement d'air tertiaire (218),
dans laquelle l'air de serre s'écoulant le long de la section de trajet d'écoulement d'air primaire (214) est en contact d'échange de chaleur avec l'air s'écoulant le long de la section de trajet d'écoulement d'air tertiaire (218) ; et
• audit emplacement de déshumidification (102), provoquer un écoulement d'eau de refroidissement le long d'un trajet d'écoulement d'eau principal (231) et définir une région d'interface air-eau (230) où l'eau de refroidissement s'écoulant le long du trajet d'écoulement d'eau principal (231) est en contact d'échange de fluide physique direct avec l'air de serre s'écoulant le long de la section de trajet d'écoulement d'air secondaire (216), et
dans laquelle la méthode comprend l'étape audit emplacement de déshumidification (102) consistant à provoquer un écoulement de dérivation de l'air de serre à travers le canal d'air principal (213) complètement ou partiellement autour de l'échangeur de chaleur (212) en contournant les sections de canal d'air primaire et/ou tertiaire (214, 218) de celui-ci.

15. Méthode selon la revendication 14, dans laquelle l'eau de refroidissement entrant dans la région d'interface air-eau (230) est refroidie à une température inférieure au point de rosée de l'air de serre entrant dans la région d'interface air-eau (230), de sorte que leur contact mutuel d'échange de fluide dans la région d'interface air-eau provoque une condensation d'eau présente dans l'air de la serre, et la création du condensat dans l'écoulement d'eau de refroidissement.

16. Méthode selon les revendications 14 ou 15, dans laquelle l'eau de refroidissement et l'air de serre dans la région d'interface air-eau (230) sont amenés en contact d'échange de fluide physique direct à travers un lit garni.

17. Méthode selon l'une quelconque des revendications 14-16, comprenant en outre :
• dans ou juste en amont de ladite région d'interface air-eau (230), l'atomisation de l'écoulement d'eau de refroidissement, de sorte que, dans ladite région d'interface air-eau, l'air de serre s'écoule à travers une brume de gouttelettes d'eau de refroidissement.

18. Méthode selon l'une quelconque des revendications 14-17, comprenant :
• à une pluralité d'emplacements de déshumidification espacés (102) dans la serre (100), la provocation des écoulements respectifs locaux d'air le long de trajets d'écoulement d'air principaux respectifs (213), chaque trajet d'écoulement d'air principal s'étendant d'un point de départ de trajet d'écoulement d'air (213a) situé à l'intérieur de la serre jusqu'à un point final de trajet d'écoulement d'air (213b) situé à l'intérieur de la serre, et, entre lesdits points de départ et final de trajet d'écoulement d'air (213a, 213b), comprenant successivement une section de trajet d'écoulement d'air primaire (214), une section de trajet d'écoulement d'air secondaire (216), et une section de trajet d'écoulement d'air tertiaire (218),
dans laquelle, pour chaque trajet d'écoulement d'air principal respectif (213), l'air s'écoulant le long de la section d'écoulement d'air primaire (214) est en contact d'échange de chaleur avec l'air s'écoulant le long de la section de trajet d'écoulement d'air tertiaire (218) ;
• à ladite pluralité d'emplacements de déshumidification espacés (102), la provocation des écoulements respectifs d'eau de refroidissement le long de trajets d'écoulement d'eau principaux respectifs (231), chaque trajet d'écoulement d'eau local définissant une région d'interface air-eau (230) où l'eau de refroidissement s'écoulant le long du trajet d'écoulement d'eau local respectif est en contact d'échange de fluide avec l'air de serre s'écoulant le long de la section de trajet d'écoulement d'air secondaire (216) du trajet d'écoulement d'air principal respectif (213) ; et
• à partir d'un emplacement commun, l'alimentation des écoulements d'eau de refroidissement aux emplacements de déshumidification respectifs (102) le long de trajets d'alimentation en eau globaux respectifs (250) qui forment des extensions en amont des trajets d'écoulement d'eau principaux locaux respectifs (231).
